# EUROPÄISCHE PATENTSCHRIFT

(11) **EP 2 594 755 B1**
(45) Veröffentlichungstag und Bekanntmachung des Hinweises auf die Patenterteilung: **02.01.2019**
(21) Anmeldenummer: 12192590.3
(22) Anmeldetag: 14.11.2012
(51) Int. Cl.: F01M 5/00, F01M 11/03, B01D 27/10, B01D 35/18, B01D 36/00, F16N 39/04, F16N 39/06

(54) **Schmierölnebenstromreinigungsvorrichtung**
Lubricating oil auxiliary flow cleaning device
Dispositif de nettoyage en dérivation pour lubrifiant

(30) Priorität: 18.11.2011 DE 102011086670
(43) Veröffentlichungstag der Anmeldung: 22.05.2013
(73) Patentinhaber: MAN Energy Solutions SE, 86153 Augsburg (DE)
(72) Erfinder: König, Nikolaus, 82278 Althegnenberg (DE); Gruschwitz, Florian, 86153 Augsburg (DE)

(56) Entgegenhaltungen:
- EP-A2- 0 131 348
- EP-A2- 2 039 893
- WO-A1-2008/147785
- WO-A1-2010/049411
- DE-A1- 10 305 513
- GB-A- 2 444 265
- US-A- 2 425 848
- US-A- 3 574 509
- US-A- 6 024 880

## Beschreibung

Die Erfindung betrifft eine Schmierölnebenstromreinigungsvorrichtung nach dem Oberbegriff des Anspruchs 1.

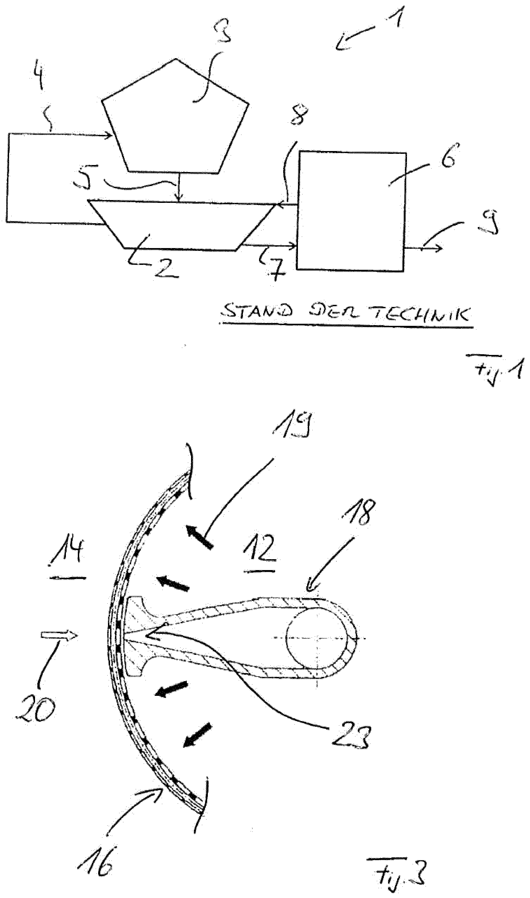

Fig. 1 zeigt den grundsätzlichen, aus dem Stand der Technik bekannten Aufbau eines Schmierölsystems 1 einer Brennkraftmaschine eines Kraftfahrzeugs, vorzugsweise einer Schiffsdieselbrennkraftmaschine eines Schiffs. Die im Folgenden beschriebene Einrichtung ist natürlich neben der Verwendung bei Schiffsdieselmotoren auch im stationären Motorenbetrieb, wie z. Bsp. bei einem Dieselmotorenkraftwerk, eine typische Verwendungsform. So umfasst das in Fig. 1 gezeigte Schmierölsystem 1 einen Schmieröltank 2, in welchem Schmieröl bereitgehalten wird, wobei im Schmieröltank 2 bereitgehaltenes Schmieröl einer Brennkraftmaschine 3 zur Schmierung derselben über einen Vorlauf 4 zugeführt und ausgehend von der Brennkraftmaschine 3 über einen Rücklauf 5 dem Schmieröltank 2 zurückgeführt werden kann, wobei dieser Vorlauf 4 und Rücklauf 5 einen sogenannten Hauptstrom des Schmierölsystems 1 bilden. Das Schmierölsystem 1 der Fig. 1 umfasst weiterhin eine Reinigungsvorrichtung 6 für Schmieröl, wobei diese Reinigungsvorrichtung 6 für das Schmieröl als sogenannte Schmierölnebenstromreinigungsvorrichtung ausgeführt ist. So ist der Schmierölnebenstromreinigungsvorrichtung 6 über einen Vorlauf 7 ausgehend vom Schmieröltank zu reinigendes Schmieröl zuführbar, wobei in der Schmierölnebenstromreinigungsvorrichtung 6 gereinigtes Schmieröl über einen Rücklauf 8 in Richtung auf den Schmieröltank 2 zurückgeführt werden kann. Wie bereits erwähnt, bilden der Vorlauf 4 und der Rücklauf 5, die mit der Brennkraftmaschine 3 und dem Schmieröltank 2 gekoppelt sind, den Hauptstrom des Schmierölsystems 1. Der Vorlauf 7 und der Rücklauf 8, die mit der Schmierölnebenstromreinigungsvorrichtung 6 und dem Schmieröltank 2 gekoppelt sind, bilden den Nebenstrom des Schmierölsystems 1. Über einen Schmutzaustrag 9 können aus dem Schmieröl entfernte Partikel aus dem Schmierölsystem 1 im Bereich der Schmierölnebenstromreinigungsvorrichtung 6 ausgetragen werden.

Aus der DE 103 33 058 A1 ist eine aus dem Stand der Technik bekannte Schmierölnebenstromreinigungsvorrichtung mit einer Zentrifuge bekannt.

Die US 3 574 509 A offenbart bereits eine Schmierölnebenstromreinigungsvorrichtung, bei dieser auf das Regenerieren des Filtermaterials im Filter abgezielt wird.

Hievon ausgehend liegt der Erfindung die Aufgabe zu Grunde, eine neuartige Schmierölnebenstromreinigungsvorrichtung zu schaffen, bei dieser eine Reinigung des zum Rückspülen des Filtermediums der Filtereinrichtung genutzten Schmieröls durchführbar ist und die Rüstzeiten der Schmierölnebenstromreinigungsvorrichtung minimiert sind.

Diese Aufgabe wird durch eine Schmierölnebenstromreinigungsvorrichtung gemäß Anspruch 1 gelöst. Hiernach umfasst die Schmierölnebenstromreinigungsvorrichtung eine einen Rückspülauffangtank und einen Rückspülschuh aufweisende Rückspüleinrichtung für die Filtereinrichtung, wobei in einem Rückspülbetriebszustand das Filtermedium abhängig von einer Relativposition zwischen Filtermedium und Rückspülschuh in Richtung auf den Rückspülauffangtank durchströmt ist.

Die Erfindung stellt eine Schmierölnebenstromreinigungsvorrichtung mit einer höheren Effektivität bereit.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung eines Schmierölsystems mit einer Schmierölnebenstromreinigungsvorrichtung;
- Fig. 2:: eine schematisierte Darstellung einer erfindungsgemäßen Schmierölnebenstromreinigungsvorrichtung; und
- Fig. 3:: ein Detail der erfindungsgemäßen Schmierölnebenstromreinigungsvorrichtung.

Die hier vorliegende Erfindung betrifft eine Schmierölnebenstromreinigungsvorrichtung 6 zur Reinigung eines einer Brennkraftmaschine 3, insbesondere eine Schiffsdieselbrennkraftmaschine, zuzuführenden Schmieröls, wobei die Reinigung des Schmieröls mit der Schmierölnebenstromreinigungsvorrichtung 6 nicht im sogenannten Hauptstrom, sondern im sogenannten Nebenstrom des Schmierölsystems erfolgt.

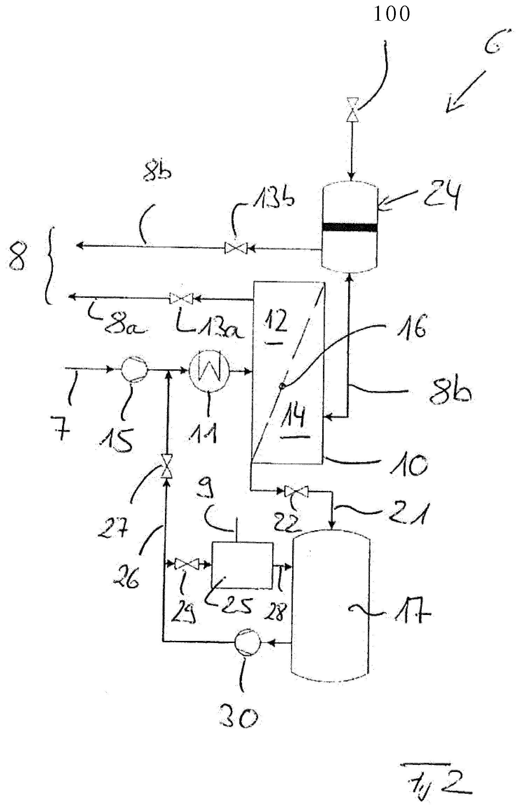

Fig. 2 zeigt den grundsätzlichen Aufbau einer bevorzugten Ausführungsform einer erfindungsgemäßen Schmierölnebenstromreinigungsvorrichtung 6. Wie bereits im Zusammenhang mit Fig. 1 ausgeführt, ist die Schmierölnebenstromreinigungseinrichtung 6 über einen Vorlauf 7 und einen Rücklauf 8 mit einem in Fig. 2 nichtgezeigten Schmieröltank koppelbar. Über den Vorlauf 7 ist zu reinigendes Schmieröl der Schmierölnebenstromreinigungsvorrichtung 6 ausgehend vom Schmieröltank 2 zuführbar. Über den Rücklauf 8 kann gereinigtes Schmieröl ausgehend von der Schmierölnebenstromreinigungsvorrichtung 6 in Richtung auf den Schmieröltank 2 zurück geführt werden.

Gemäß Fig. 2 umfasst die Schmierölnebenstromreinigungsvorrichtung 6 eine Filtereinrichtung 10. Die Filtereinrichtung 10 dient der eigentlichen Filterung des zu reinigenden Schmieröls, wobei die Filtereinrichtung 10 über den Vorlauf 7 und den Rücklauf 8 mit dem in Fig. 2 nicht gezeigten Schmieröltank 2 koppelbar ist.

Gemäß Fig. 2 umfasst die erfindungsgemäße Schmierölnebenstromreinigungsvorrichtung 6 weiterhin eine Temperiereinrichtung 11. Die Temperiereinrichtung 11 dient der Temperierung, nämlich der Erwärmung, des zu reinigenden Schmieröls und ist dem Vorlauf 7 zugeordnet.

Die Temperiereinrichtung 11 ist derart zwischen die Filtereinrichtung 10 und den nicht gezeigten Schmieröltank 2 im Bereich des Vorlaufs 7 geschaltet, dass dann, wenn in einem sogenannten Filtrationsvorbereitungsbetriebszustand der Schmierölnebenstromreinigungsvorrichtung 6 eine Schmieröltemperatur kleiner als ein definierter Grenzwert ist, die Filtereinrichtung 10 unter Umgehung der Filterfunktion und unter Erwärmung des Schmieröls von Schmieröl durchströmt ist. Hierzu ist eine erste Ölkammer 12 der Filtereinrichtung 10, die der Aufnahme des zu reinigenden Schmieröls dient, einerseits über den Vorlauf 7 und andererseits über einen ersten Rücklauf 8a des Rücklaufs 8 mit dem Schmieröltank 2 koppelbar.

Dem ersten Rücklauf 8a, über welchen unter Umgehung der Filterfunktion der Filtereinrichtung 10 Schmieröl durch die Filtereinrichtung 10 gefördert werden kann, ist eine erste Absperreinrichtung 13a zugeordnet.
Dann, wenn in einem Filtrationsbetriebszustand die Schmieröltemperatur des Schmieröls größer als der definierte Grenzwert ist, ist die Filtereinrichtung 10 unter Nutzung der Filterfunktion derselben von Schmieröl durchströmbar, wozu eine zweite Ölkammer 14 der Filtereinrichtung 10, die der Handhabung von gereinigtem Schmieröl dient, über einen zweiten Rücklauf 8b des Rücklaufs 8 ebenfalls mit dem Schmieröltank 2 koppelbar ist.
Dem zweiten Rücklauf 8b, über welchen unter Nutzung der Filterfunktion der Filtereinrichtung 10 Schmieröl durch die Filtereinrichtung 10 gefördert werden kann, ist eine zweite Absperreinrichtung 13b zugeordnet.

Im Filtrationsvorbereitungsbetriebszustand der Schmierölnebenstromreinigungsvorrichtung 6, also dann, wenn die Schmieröltemperatur kleiner als der Grenzwert ist, ist die erste Absperreinrichtung 13a geöffnet und die zweite Absperreinrichtung 13b ist geschlossen, sodass dann zu reinigendes Schmieröl über den Vorlauf 7 und die Temperiereinrichtung 11 unter Umgehung der Filterfunktion der Filtereinrichtung 10 ausschließlich über die erste Ölkammer 12 der Filtereinrichtung 10 strömt und über den ersten Rücklauf 8a dem Schmieröltank 2 zurück geführt werden kann. Dies erfolgt so lange, bis die Schmieröltemperatur den entsprechenden Grenzwert übersteigt, wobei dann im Filtrationsbetriebszustand die Schmierölnebenstromreinigungsvorrichtung 6, also dann, wenn die Schmieröltemperatur größer als der Grenzwert ist, die erste Absperreinrichtung 13a geschlossen und die zweite Absperreinrichtung 13b geöffnet ist, sodass dann zu reinigendes Schmieröl über den Vorlauf 7 der ersten Ölkammer 12 zugeführt wird und gereinigtes Schmieröl ausgehend von der zweiten Ölkammer 14 der Filtereinrichtung 10 über den zweiten Rücklauf 8b des Rücklaufs 8 dem Schmieröltank 2 zugeleitet wird.

Zur Förderung des Schmieröls ist dabei gemäß Fig. 2 dem Vorlauf 7 stromaufwärts der Temperiereinrichtung 11 eine Förderpumpe 15 zugeordnet.

Die erste Ölkammer 12 und die zweite Ölkammer 14 der Filtereinrichtung 10 sind von einem Filtermedium 16 getrennt. Dieses Filtermedium 16 ist im Filtrationsbetrieb derart durchströmt, dass zu reinigendes Öl ausgehend von der ersten Ölkammer 12 unter Reinigung desselben in die zweite Ölkammer 14 gelangt, wobei aus dem zu reinigendes Schmieröl zu entfernende Partikel vom Filtermedium 16 zurück gehalten werden.

Beim Filtermedium 16 kann es sich zum Beispiel um ein Vliesfiltermaterial handeln, welches eine hohe Schmutzaufnahme von zu entfernenden Partikeln bei gleichzeitiger Abscheidung von Partikeln in der Größenordnung von wenigen Mikrometern gewährleistet.

Mit den obigen Details kann gewährleistet werden, dass eine Filterung nur dann erfolgt, wenn das zu reinigende Schmieröl eine geeignete Schmieröltemperatur aufweist. Hierdurch kann die Effektivität der Schmierölreinigungsvorrichtung 6 gesteigert werden.

Ebenso kann über diese Maßnahmen eine Vorwärmung des Schmieröls im Schmieröltank 2 gewährleistet werden, um zum Beispiel bei einem Kaltstart der Brennkraftmaschine Schmieröl mit geeigneter Temperatur bereitzustellen.

Zur Effektivitätssteigerung der Schmierölnebenstromreinigungsvorrichtung 6 kann vorgesehen sein, den Vorlauf 7 und den zweiten Rücklauf 8b über einen nicht gezeigten Wärmetauscher zu koppeln. Hierbei kann dann im Filtrationsbetrieb eine thermische Kopplung zwischen dem ungefilterten Schmierölstrom und dem gefilterten Schmierölstrom gewährleistet werden, wodurch thermische Energie des gefilterten Schmieröls auf das ungereinigte Schmieröl übertragen werden kann.

Die erfindungsgemäße Schmierölnebenstromreinigungsvorrichtung 6 umfasst weiterhin eine Rückspüleinrichtung, die zumindest einen Rückspülauffangtank 17 und einen Rückspülschuh 18 umfasst. Wie bereits ausgeführt, ist im Filtrationsbetriebszustand der Schmierölnebenstromreinigungsvorrichtung 6 dieselbe derart von Schmieröl durchströmt, dass zu reinigendes Schmieröl ausgehend von der ersten Ölkammer 12 in den Bereich der zweiten Ölkammer 14 der Filtereinrichtung 10 gelangt, wobei hierbei das Filtermedium 16 der Filtereinrichtung 10 in einer ersten Richtung 19 (siehe Fig. 3) durchströmt ist.

In einem Rückspülbetriebszustand der Schmierölnebenstromreinigungsvorrichtung 6 ist das Filtermedium 16 abhängig von einer Relativposition zwischen dem Filtermedium 16 und dem Rückspülschuh 18 in einer entgegen gesetzten, zweiten Richtung 20 (siehe Fig. 3) in Richtung auf den Rückspülauffangtank 17 durchströmt.

Fig. 2 kann entnommen werden, dass der Rückspülauffangtank 17 mit der Filtereinrichtung 10 über eine Ölleitung 21, der eine Absperreinrichtung 22 zugeordnet ist, gekoppelt ist, wobei im Filtrationsbetriebszustand sowie Filtrationsvorbereitungsbetriebszustand der Schmierölnebenstromreinigungsvorrichtung 6 diese Absperreinrichtung 22 geschlossen ist und wobei im Rückspülbetriebszustand der Schmierölnebenstromreinigungsvorrichtung 6 diese Absperreinrichtung 22 geöffnet ist, um das Rückspülen des Filtermediums 16 zu ermöglichen.

Der Rückspülschuh 18, welcher zum Rückspülen des Filtermediums 16 mit dem Rückspülauffangtank 17 zusammenwirkt, ist gemäß Fig. 3 innerhalb der ersten Ölkammer 12 der Filtereinrichtung 10 positioniert und relativ zum Filtermedium 16 verlagerbar.

In dem Ausführungsbeispiel der Fig. 3 ist das Filtermedium 16 zylindrisch konturiert, wobei der Spülschuh 18 innerhalb des zylindrisch konturierten Filtermediums 16 und damit innerhalb der ersten Ölkammer 12 relativ zum Filtermedium 16 rotatorisch verlagert werden kann, nämlich über die gesamte Umfangserstreckung des Filtermediums 16.

Dann, wenn im Fitrationsbetriebszustand festgestellt wird, dass das Filtermedium 16 durch die aus dem Schmieröl entfernten Partikel blockiert ist, wird auf den Rückspülbetriebszustand umgeschaltet und die Durchströmungsrichtung des Filtermediums 16 geändert. Der Rückspülschuh 18 bestimmt dabei auf Grundlage seiner Relativposition zum Filtermedium 16 einen Rückspülspalt 23, durch welchen eine Rückspülung des Filtermediums 16 in der zweiten Richtung 20 zum drucklosen Rückspülauffangtank 17 hin erfolgen kann. Bei der Rückspülung wird die Relativposition zwischen Rückspülschuh 18 und Filtermedium 16 durch eine Relativbewegung zwischen denselben verändert, sodass eine vollständige Rückspülung und damit Reinigung des Filtermediums 16 möglich ist.

Hierbei wird vorzugsweise der Rückspülschuh 18 durch Drehung relativ zum zylindrischen Filtermedium 16 verlagert. Im Unterschied hierzu ist es jedoch auch möglich, den Rückspülschuh 18 feststehend auszugestalten und das Filtermedium 16 um seine Rotationsachse zu drehen.

Die Rückspülung des Filtermediums 16 erfolgt im Rückspülbetriebszustand demnach nicht gleichzeitig an der gesamten Umfangsposition desselben, sondern nacheinander immer nur an der Umfangsposition, an welchen sich der Rückspülschub 18 bzw. der vom Rückspülschuh 18 definierte Rückspülspalt 23 gerade befindet.
Im gezeigten Ausführungsbeispiel der Erfindung umfasst die Rückspüleinrichtung zusätzlich zum Rückspülauffangtank 17 und zum Rückspülschuh 19 einen dem zweiten Rücklauf 8b zugeordneten Rückspülvorlagetank 24. Im bereits erwähnten Filtrationsbetriebszustand der Schmierölnebenstromreinigungsvorrichtung 6 wird der Rückspülvorlagetank 24 zunächst mit gereinigtem Schmieröl befüllt, wobei nach Befüllung dieses Rückspülvorlagetanks 24 gereinigtes Schmieröl ausgehend von demselben dem Schmieröltank 2 zugeführt werden kann. Im Rückspülbetriebszustand der Schmierölnebenstromreinigungsvorrichtung 6 wird das im Filtrationsbetriebszustand im Rückspülvorlagetank 24 gesammelte, gereinigte Schmieröl zur Rückspülung des Filtermediums 16 genutzt, in dem bei geschlossener Absperreinrichtung 13a und geöffneter Absperreinrichtung 22 dieses gereinigte Schmieröl in der zweiten Richtung 20 ausgehend von der zweiten Ölkammer 14 in die erste Ölkammer 12 der Filtereinrichtung 10 unter Durchströmung des rückzuspülenden Filtermediums 16 gefördert wird, nämlich wiederum abhängig von der Relativposition zwischen dem Rückspülschuh 18 und dem rückzuspülenden Filtermedium 16.

Hierzu ist ein Druckluftventil 100, welches den Rückspülvorlagetank 24 mit Druckluft beaufschlagt, geöffnet und die dem zweiten Rücklaufs 8b zugeordneten Absperreinrichtung 13b ist hierbei geschlossen.

Es sei an dieser Stelle darauf hingewiesen, dass obwohl die Rückspülung über das im Rückspülvorlagetank 24 gesammelte Schmieröl bevorzugt ist, auch eine andere Rückspülung des Filtermediums 16 der Filtereinrichtung 10 möglich ist. So ist es zum Beispiel möglich, die Rückspülung ausschließlich über Druckluft zu realisieren. Hierzu wird die Filtereinrichtung 10 vom Schmieröl entleert und das Filtermedium 16 wird von Druckluft durchströmt, um vom Filtermedium 16 zurückerhaltene Partikel aus demselben zu entfernen und als Trockenmasse in einem nicht gezeigten Auffangbehälter aufzufangen. Hierzu muss dann ein weiterer Behälter vorgehalten werden.

Ferner ist eine Variante möglich, in welcher sowohl anströmseitig als auch abströmseitig, also sowohl im Bereich der ersten Ölkammer 12 als auch im Bereich der zweiten Ölkammer 14 jeweils ein Rückspülschuh positioniert ist, die sich gegenüber liegen, wobei zwischen beiden Rückspülschuhen das Filtermedium 16 positioniert ist und dann zwischen den Rückspülschuhen und dem Filtermedium zum Rückspülen eine Relativbewegung etabliert wird. In diesem Fall wäre dann bei mit Schmieröl gefüllter Filtereinrichtung 10 eine Rückspülung über die beiden zusammenwirkenden Rückspülschuhe möglich.

Die Rückspülung mit Druckluft kann auch mit der Rückspülung über das im Rückspülvorlagetank 24 gesammelte Schmieröl intermittierend kombiniert werden. In diesem Fall würde dann zeitlich aufeinanderfolgend entweder eine Rückspülung über das im Rückspülvorlagetank 24 gesammelte Schmieröl oder über die Druckluft erfolgen.

Ferner ist eine Rückspülung des Filtermediums über eine weitere nicht gezeigte Vorrichtung, zum Beispiel einen Kolben, ein Ventil oder eine Ultraschallsonotrode möglich, bei welcher die Rückspülung des Filtermediums 16 mit dem Rückspülvorlagetank 24 gesammelten und gereinigten Schmieröl instationär, zum Beispiel durch Pulsation, erfolgt.

So ist es zum Beispiel möglich, über eine stirnseitig zum Rückspülspalt 23 des Rückspülschuhs 18 angebrachte Ultraschallsonotrode das zum Rückspülen genutzte Schmieröl einer Ultraschallbestrahlung über die Ultraschallsonotrode auszusetzen, wodurch eine Effizienzsteigerung für die Rückspülung des Filtermediums 16 bereitgestellt werden kann.

Im gezeigten Ausführungsbeispiel der Schmierölnebenstromreinigungsvorrichtung 6 umfasst dieselbe weiterhin eine mit dem Rückspülauffangtank 17 zusammenwirkende Ölrückgewinnungseinrichtung 25. Fig. 2 kann entnommen werden, dass der Rückspülauffangtank 17 über eine Ölleitung 26, der eine Absperreinrichtung 27 zugeordnet ist, mit dem Vorlauf 7 koppelbar ist, wobei von dieser Ölleitung 26 eine Ölleitung 28 abzweigt, der ebenfalls eine Absperreinrichtung 29 zugeordnet ist, wobei die Ölrückgewinnungseinrichtung 25 dieser zum Rückspülauffangtank 17 zurückführende Ölleitung 28 stromabwärts der Absperreinrichtung 29 zugeordnet ist. Zur Förderung von Öl ausgehend vom Rückspülauffangtank 17 in Richtung auf den Vorlauf 7 bzw. die Ölrückgewinnungseinrichtung 25 ist der Ölleitung 26 eine Ölpumpe 30 zugeordnet.

Die Ölrückgewinnungseinrichtung 25 dient der Reinigung des zum Rückspülen des Filtermediums 16 der Filtereinrichtung 10 genutzten Schmieröls. Um aus diesem im Rückspülauffangtank 17 gesammelten Schmieröl Schmutzpartikel zu entfernen, wird das Schmieröl bei geschlossener Absperreinrichtung 27, bei geöffneter Absperreinrichtung 29 und geschlossener Absperreinrichtung 22 über die Pumpe 30 über die Ölrückgewinnungseinrichtung 25 geführt, die zum Beispiel als Freistrahlzentrifuge ausgeführt sein kann. Im Bereich der Ölrückgewinnungseinrichtung 25 werden vom Schmieröl Schmutzpartikel entfernt, sodass anschließend im Rückspülauffangtank 17 gereinigtes Schmieröl vorliegt. Das so gereinigte Schmieröl kann dann über die Pumpe 30 bei geschlossener Absperreinrichtung 29 und geöffneter Absperreinrichtung 27 in Richtung auf den Vorlauf 7 gefördert und so im Schmierölkreislauf des Schmierölsystems zurückgeführt werden.

Es ist möglich, die obige Ölrückgewinnung mithilfe der Ölrückgewinnungseinrichtung 25 parallel zur Filtrationsvorbereitung über die Temperiereinrichtung 11 durchzuführen. Dadurch können Rüstzeiten der Schmierölnebenstromreinigungsvorrichtung 6 minimiert werden. Ebenso kann die Schmierölrückgewinnung parallel zum regulären Filtrationsbetrieb erfolgen. Auch hierdurch können Rüstzeiten reduziert werden.

Bei der Rückführung des über die Ölrückgewinnungseinrichtung 25 gereinigten Schmieröls aus dem Rückspülauffangtank 17 in den Vorlauf 7 wird die Pumpe 15 deaktiviert, sodass das gereinigte Schmieröl über die Pumpe 30 aus dem Rückspülauffangtank 17 in den Vorlauf 7 gefördert werden kann.

An einer Abwandlung kann vorgesehen sein, zusätzlich zum Spülauffangtank 17 einen zusätzlichen Öltank vorzusehen, der zur Zirkulation über die Ölrückgewinnungseinrichtung 25 genutzt wird. In diesem Fall könnte dann parallel zur Ölrückgewinnung eine Rückspülung des Filtermediums 16 erfolgen. Eine solche Variante ist insbesondere dann von Vorteil, wenn zwischen Rückspülungen kurze Zeitintervalle liegen.

### Bezugszeichenliste

- 1: Schmierölsystem
- 2: Schmieröltank
- 3: Brennkraftmaschine
- 4: Vorlauf
- 5: Rücklauf
- 6: Schmierölnebenstromreinigungsvorrichtung
- 7: Vorlauf
- 8: Rücklauf
- 8a: Rücklauf
- 8b: Rücklauf
- 9: Schmutzaustrag
- 10: Filtereinrichtung
- 11: Temperiereinrichtung
- 12: Ölkammer
- 13a: Absperreinrichtung
- 13b: Absperreinrichtung
- 14: Ölkammer
- 15: Pumpe
- 16: Filtermedium
- 17: Rückspülauffangtank
- 18: Rückspülschuh
- 19: Richtung
- 20: Richtung
- 21: Ölleitung
- 22: Rückspülauffangtank
- 23: Rückspülspalt
- 24: Rückspülvorlagetank
- 25: Ölruckgewinnungseinrichtung
- 26: Ölleitung
- 27: Rückspülauffangtank
- 28: Ölleitung
- 29: Rückspülauffangtank
- 30: Pumpe

## Patentansprüche

1. Schmierölnebenstromreinigungsvorrichtung, mit einer ein Filtermedium (16) aufweisenden Filtereinrichtung (10) zur Reinigung von Schmieröl, wobei der Filtereinrichtung (10) aus einem Schmieröltank zu reinigendes Schmieröl zuführbar ist, und wobei von der Filtereinrichtung (10) aus gereinigtes Schmieröl in den Schmieröltank rückführbar ist, wobei in einem Filtrationsbetriebszustand das Filtermedium (16) in einer ersten Richtung von Schmieröl durchströmt ist, **gekennzeichnet durch** eine einen Rückspülauffangtank (17) und einen Rückspülschuh (18) aufweisende Rückspüleinrichtung für die Filtereinrichtung (10), wobei in einem Rückspülbetriebszustand das Filtermedium (16) abhängig von einer Relativposition zwischen Filtermedium (16) und Rückspülschuh (18) in einer zweiten, entgegen gesetzten Richtung in Richtung auf den Rückspülauffangtank (17) durchströmt ist, wobei die Rückspüleinrichtung eine mit dem Rückspülauffangtank (17) zusammenwirkende Ölruckgewinnungseinrichtung (25) aufweist und der Rückspülauffangtank (17) über eine Ölleitung (26), der eine Absperreinrichtung (27) zugeordnet ist, mit einem vom Schmieröltank zur Filtereinrichtung (10) führenden Vorlauf (7) koppelbar ist, und die Ölruckgewinnungseinrichtung (25) zusammen mit einer weiteren Absperreinrichtung (29) einer von dieser Ölleitung (26) abzweigenden Ölleitung (28) zugeordnet ist.

2. Schmierölnebenstromreinigungsvorrichtung nach Anspruch 1, **dadurch gekennzeichnet, dass** die Filtereinrichtung (10) eine erste Ölkammer (12) für zu reinigendes Schmieröl und eine zweite Ölkammer (14) für gereinigtes Schmieröl aufweist, wobei diese Ölkammern durch das Filtermedium (16) getrennt sind, wobei der Rückspülschuh (18) innerhalb der ersten Ölkammer (12) relativ verlagerbar zum Filtermedium (16) positioniert und mit dem Rückspülauffangtank (17) gekoppelt ist.

3. Schmierölnebenstromreinigungsvorrichtung nach Anspruch 2, **dadurch gekennzeichnet, dass** der Rückspülauffangtank (17) mit der ersten Ölkammer (12) über eine Ölleitung (21), der eine Absperreinrichtung (22) zugeordnet ist, koppelbar ist, wobei im Filtrationsbetriebszustand diese Absperreinrichtung (22) geschlossen ist, und wohingegen im Rückspülbetriebszustand diese Absperreinrichtung (22) geöffnet ist.

4. Schmierölnebenstromreinigungsvorrichtung nach einem der Ansprüche 1 bis 3, **dadurch gekennzeichnet, dass** die Rückspüleinrichtung einen Rückspülvorlagetank (24) aufweist, wobei im Filtrationsbetriebszustand zunächst der Rückspülvorlagetank unter Durchströmung des Filtermediums (16) in der ersten Richtung mit gereinigtem Schmieröl befüllbar und dann ausgehend vom Rückspülvorlagetank (24) gereinigtes Schmieröl in den Schmieröltank rückführbar ist, und wobei im Rückspülbetriebszustand gereinigtes Schmieröl ausgehend vom Rückspülvorlagetank unter Durchströmung des Filtermediums abhängig von der Relativposition zwischen Filtermedium und Rückspülschuh (18) in der zweiten Richtung in den Rückspülauffangtank (17) förderbar ist.

## Claims

1. A lubricating oil bypass flow cleaning apparatus, having a filtering device (10) comprising a filter medium (16) for cleaning lubricating oil, wherein the filtering device (10) can be supplied with lubricating oil to be cleaned from a lubricating oil tank, and wherein cleaned lubricating oil from the filtering device (10) can be returned into the lubricating oil tank, wherein in a filtration operating state the filter medium (16) is flowed through by lubricating oil in a first direction, **characterized by** a back-flushing device for the filtering device (10) comprising a back-flushing collection tank (17) and a back-flushing shoe (18), wherein in a back-flushing operating state the filter medium (16), dependent on a relative position between filter medium (16) and back-flushing shoe (18), is flowed through in a second, opposite direction, in the direction of the back-flushing collection tank (17), wherein the back-flushing device comprises an oil reclamation device (25), and the back-flushing collection tank (17) can be coupled, via an oil line (26), which is assigned a shut-off device (27), to an advance flow (7) leading from the lubricating oil tank to the filtering device (10) and the oil reclamation device (25) together with a further shut-off device (29) is assigned to an oil line (28) branching off of said oil line (26).

2. The lubricating oil bypass flow cleaning apparatus according to Claim 1, **characterized in that** the filtering device (10) comprises a first oil chamber (12) for lubricating oil to be cleaned and a second oil chamber (14) for cleaned lubricating oil, wherein these oil chambers are separated by the filter medium (16), wherein the back-flushing shoe (18) is positioned moveable relative to the filter medium (16) within the first oil chamber (12) and is coupled to the back-flush collection tank (17).

3. The lubricating oil bypass flow cleaning apparatus according to Claim 2, **characterized in that** the back-flushing collection tank (17) can be coupled to the first oil chamber (12) via an oil line (21), which is assigned a shut-off device (22), wherein in the filtration operating state this shut-off device (22) is closed, and whereas in the back-flushing operating state, this shut-off device (22) is opened.

4. The lubricating oil bypass flow cleaning apparatus according to any one of the Claims 1 to 3, **characterized in that** the back-flushing device comprises a back-flushing storage tank (24), wherein in the filtration operating state the back-flushing storage tank can be initially filled with cleaned lubricating oil subject to flowing through the filter medium (16) in the first direction and then, emanating from the back-flushing storage tank (24), cleaned lubricating oil can be returned into the lubricating oil tank, and wherein in the back-flushing operating state cleaned lubricating oil emanating from the back-flushing storage tank can be conveyed, subject to flowing through the filter medium, dependent on the relative position between filter medium and back-flushing shoe (18), into the back-flushing collection tank (17) in the second direction.

## Revendications

1. Dispositif de purification d'un flux annexe de lubrifiant, comportant un dispositif de filtrage (10) présentant un milieu filtrant (16), dans lequel le dispositif de filtrage (10) peut être alimenté à partir d'un réservoir de lubrifiant en lubrifiant à purifier, et dans lequel le lubrifiant purifié peut être réalimenté dans le réservoir de lubrifiant à partir du dispositif de filtrage (10), dans lequel dans un état de fonctionnement de filtration le milieu filtrant (16) est traversé par le lubrifiant dans une direction, **caractérisé par** un dispositif de rétrolavage pour le dispositif de filtration (10), présentant un réservoir de récupération de rétrolavage (17) et un patin de rétrolavage (18), dans lequel dans un état de fonctionnement de rétrolavage le milieu filtrant (16) est traversé en fonction d'une position relative entre le milieu filtrant (16) et le patin de rétrolavage (18) dans une deuxième direction opposée dans la direction du réservoir de récupération de rétrolavage (17), dans lequel le dispositif de rétrolavage présente un dispositif de récupération de lubrifiant (25) coopérant avec le réservoir de récupération de rétrolavage (17) et le réservoir de récupération de rétrolavage (17) peut être couplé par l'intermédiaire d'une conduite de lubrifiant (26), qui est coordonnée à un dispositif d'obturation (27), avec une conduite d'amenée (7) menant du réservoir de lubrifiant au dispositif de filtrage (10), et le dispositif de récupération de lubrifiant (25) est coordonné conjointement à un deuxième dispositif d'obturation (29) à une deuxième conduite de lubrifiant (28) bifurquant de cette conduite de lubrifiant (26).

2. Dispositif de purification d'un flux annexe de lubrifiant selon la revendication 1, **caractérisé en ce que** le dispositif de filtrage (10) présente une première chambre de lubrifiant (12) pour le lubrifiant à purifier et une deuxième chambre de lubrifiant (14) pour le lubrifiant purifié, dans lequel ces chambres de lubrifiant sont séparées par le milieu filtrant (16), dans lequel le patin de rétrolavage (18) est positionné de manière déplaçable relativement au milieu filtrant (16) à l'intérieur de la première chambre de lubrifiant (12) et couplé avec le réservoir de récupération de rétrolavage (17).

3. Dispositif de purification d'un flux annexe de lubrifiant selon la revendication 2, **caractérisé en ce que** le réservoir de récupération de rétrolavage (17) peut être couplé avec la première chambre de lubrifiant (12) par l'intermédiaire d'une conduite de lubrifiant (21), qui est coordonnée à un dispositif d'obturation (22), dans lequel dans l'état de fonctionnement de filtration ce dispositif d'opération (22) est fermé et au contraire dans l'état de fonctionnement de rétrolavage ce dispositif d'obturation (22) est ouvert.

4. Dispositif de purification d'un flux annexe de lubrifiant selon une des revendications 1 à 3, **caractérisé en ce que** le dispositif de rétrolavage présente un réservoir collecteur de rétrolavage (24), dans lequel dans l'état de fonctionnement de filtration tout d'abord le réservoir collecteur de rétrolavage peut être rempli par passage à travers le milieu filtrant (16) dans la première direction avec du lubrifiant purifié et ensuite à partir du réservoir collecteur de rétrolavage (24) le lubrifiant purifié peut être réintroduit dans le réservoir de lubrifiant et dans lequel en l'état de fonctionnement de rétrolavage le lubrifiant purifié partant du réservoir collecteur de rétrolavage peut être refoulé par passage à travers le milieu filtrant en fonction de la position relative entre le milieu filtrant et le patin de rétrolavage (18) dans la deuxième direction dans le réservoir de récupération de rétrolavage (17).
